(19) 

**Europäisches Patentamt**

**European Patent Office**

**Office européen des brevets**

(11) **EP 4 607 604 A1**

(12) **EUROPEAN PATENT APPLICATION**

(43) Date of publication:
**27.08.2025 Bulletin 2025/35**

(21) Application number: **25159360.4**

(22) Date of filing: **21.02.2025**

(51) International Patent Classification (IPC):
$H01M\ 4/133^{(2010.01)}$  $H01M\ 4/38^{(2006.01)}$
$H01M\ 4/587^{(2010.01)}$  $H01M\ 10/0525^{(2010.01)}$
$H01M\ 4/36^{(2006.01)}$

(52) Cooperative Patent Classification (CPC):
**H01M 4/386; H01M 4/133; H01M 4/587;**
**H01M 10/0525;** H01M 4/364; Y02E 60/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **21.02.2024 CN 202410195542**

(71) Applicant: **Ningde Amperex Technology Limited**
**Ningde City, Fujian Province 352100 (CN)**

(72) Inventors:
• **LI, Xin**
  **Ningde City, Fujian Province 352100 (CN)**
• **SU, Yisong**
  **Ningde City, Fujian Province 352100 (CN)**
• **XIE, Yuansen**
  **Ningde City, Fujian Province 352100 (CN)**
• **HUANG, Ni**
  **Ningde City, Fujian Province 352100 (CN)**

(74) Representative: **Icosa**
  **83 avenue Denfert-Rochereau**
  **75014 Paris (FR)**

(54) **ELECTROCHEMICAL APPARATUS AND ELECTRONIC DEVICE**

(57)  An electrochemical apparatus includes a negative electrode plate comprising a negative electrode active material. The negative electrode active material includes silicon particles and graphite particles; based on a mass of the silicon particles, a mass percentage of the silicon element is A; in the negative electrode plate, based on a total quantity of the silicon particles and the graphite particles, a quantity proportion of the silicon particles is D, and a quantity proportion of the graphite particles is E; and the electrochemical apparatus has a capacity of B mAh when discharged from a rated full-charge voltage to 3.0 V at a rate of 0.2C, and has a capacity of C mAh when discharged to 2.75 V; where $[(1.69+8.34A)*D+E]/[(0.42+9.6A)*D+E] >C/B>[(0.56+9.46A)*D+E]/[(0.42+9.6A)*D+E]$.

**EP 4 607 604 A1**

**Description**

**TECHNICAL FIELD**

This application relates to an electrochemical apparatus and an electronic device.

**BACKGROUND**

With the advantages such as high energy density, high operating voltage, good load characteristics, and high charging speed, lithium-ion batteries have been widely used in the fields such as mobile phones, micro cameras, palmtop computers, and laptops quickly.

However, as increasingly high requirements are imposed on the energy and power performance of batteries from downstream applications, higher requirements are also imposed on the cycling performance and energy density of lithium-ion batteries.

With a high theoretical gram capacity (4200 mAh/g), silicon materials have a promising application prospect in lithium-ion batteries. However, during a charge-discharge cycling process, with intercalation and deintercalation of Li ions, silicon materials experience 120% to 300% of volume expansion. This leads to pulverization of silicon-based materials and separation of the silicon-based materials from a current collector, resulting in deteriorated conductivity of a negative electrode and reducing the cycling performance and energy density of lithium-ion batteries.

**SUMMARY**

In view of the foregoing consideration, this application is intended to provide an electrochemical apparatus and an electronic device, so as to improve the cycling performance and energy density as well as ensure swelling resistance.

Some embodiments of this application are implemented as follows.

According to a first aspect, an embodiment of this application provides an electrochemical apparatus, where the electrochemical apparatus includes:

a negative electrode plate, where the negative electrode plate includes a negative electrode active material; the negative electrode active material includes silicon particles and graphite particles; the silicon particles contain the silicon element; and based on a mass of the silicon particles, a mass percentage of the silicon element is A;

in the negative electrode plate, based on a total quantity of the silicon particles and the graphite particles, a quantity proportion of the silicon particles is D, and a quantity proportion of the graphite particles is E;

the electrochemical apparatus has a capacity of B mAh when discharged from a rated full-charge voltage to 3.0 V at a rate of 0.2C, and the electrochemical apparatus has a capacity of C mAh when discharged from the rated full-charge voltage to 2.75 V at the rate of 0.2C; and

A, B, C, D, and E satisfy the following relationship:

$$[(1.69+8.34A)*D+E]/[(0.42+9.6A)*D+E]>C/B>[(0.56+9.46A)*D+E]/[(0.42+9.6A)*D+E].$$

The inventors have found that setting the quantity proportion D of the silicon particles, the quantity proportion E of the graphite particles, the mass percentage A of the silicon element in the silicon particles, the capacity B measured when the electrochemical apparatus is discharged to 3.0 V, and the capacity C measured when the electrochemical apparatus is discharged to 2.75 V in the negative electrode plate to satisfy the above relationship can effectively improve the cycling performance and energy density of the silicon-containing electrochemical apparatus and also ensure swelling resistance of the battery.

Further, in this technical solution, values of A, D, E, and C/B are all closely associated with the energy density, cycling performance, and swelling resistance. Increasing A is conducive to increasing the energy density but is not conducive to improving the cycling performance or swelling resistance; increasing D is conducive to increasing the energy density but is not conducive to improving the cycling performance or swelling resistance; increasing E is conducive to improving the cycling performance and swelling resistance but is not conducive to increasing the energy density; and increasing C/B is conducive to increasing the energy density but is not conducive to improving the cycling performance. In addition, the values of A, D, E, and C/B are associated with each other and have a close association. The inventors have found that setting A, B, C, and D to satisfy the above relationship effectively improves the cycling performance and energy density of the silicon-containing electrochemical apparatus and also ensures swelling resistance.

In some optional embodiments, the electrochemical apparatus satisfies at least one of the following characteristics:

$$(1)\ 0.3 \leq A \leq 0.5;$$

$$(2)\ 3793 \leq B \leq 4256;$$

$$(3)\ 3863 \leq C \leq 4311;$$

$$(4)\ 0.1 \leq D \leq 0.6;$$

or

$$(5)\ 0.4 \leq E \leq 0.9.$$

In this technical solution, further limiting the quantity proportion D of the silicon particles, the quantity proportion E of the graphite particles, the mass percentage A of the silicon element in the silicon particles, the capacity B measured when the electrochemical apparatus is discharged to 3.0 V, and the capacity C measured when the electrochemical apparatus is discharged to 2.75 V to be within the above ranges is conducive to further improving the cycling performance and energy density of the electrochemical apparatus and also ensures swelling resistance.

In some optional embodiments, the electrochemical apparatus satisfies at least one of the following characteristics:

$$(1)\ 0.35 \leq A \leq 0.45;$$

$$(2)\ 3821 \leq B \leq 4122;$$

$$(3)\ 3958 \leq C \leq 4212;$$

$$(4)\ 0.1 \leq D \leq 0.4;$$

or

$$(5)\ 0.6 \leq E \leq 0.9.$$

In this technical solution, further limiting the quantity proportion D of the silicon particles, the quantity proportion E of the graphite particles, the mass percentage A of the silicon element in the silicon particles, the capacity B measured when the electrochemical apparatus is discharged to 3.0 V, and the capacity C measured when the electrochemical apparatus is discharged to 2.75 V to be within the above ranges is conducive to further improving the cycling performance and energy density of the electrochemical apparatus and also ensures swelling resistance.

In some optional embodiments, the quantity proportion D of the silicon particles and the quantity proportion E of the graphite particles satisfy the following relationship: $0.11 \leq D/E \leq 1.5$.

In this technical solution, the quantity proportion D of the silicon particles and the quantity proportion E of the graphite particles satisfying the above relationship is more conducive to improving the cycling performance and energy density of the electrochemical apparatus and also ensures swelling resistance.

In some optional embodiments, the mass percentage A of the silicon element and the capacity B measured when the electrochemical apparatus is discharged from the rated full-charge voltage to 3.0 V at the rate of 0.2C satisfy the following relationship: $0.077 \leq 1000A/B \leq 0.121$.

In this technical solution, the mass percentage A of the silicon element and the capacity B measured when the electrochemical apparatus is discharged from the rated full-charge voltage to 3.0 V at the rate of 0.2C satisfy the above relationship. This is more conducive to improving the cycling performance and energy density of the electrochemical apparatus and also ensures swelling resistance.

In some optional embodiments, the electrochemical apparatus includes an electrolyte;

the electrolyte includes a carbonate compound, and the carbonate compound includes at least one of ethylene carbonate, propylene carbonate, diethyl carbonate, methyl ethyl carbonate, dimethyl carbonate, or sub-propylene carbonate; and

based on a mass of the electrolyte, a mass percentage of the carbonate compound is Y%, where 20≤Y≤55.

In some optional embodiments, the electrochemical apparatus includes an electrolyte; the electrolyte includes a compound S; the compound S includes at least one of lithium difluorophosphate, lithium bis(trifluoromethanesulfonyl) imide, or lithium bis(fluorosulfonyl)imide; and

based on the mass of the electrolyte, a mass percentage of the compound S is X%, where 0.3≤X≤1.9; and optionally, 0.3≤X≤1.1.

In this technical solution, the electrolyte includes at least one of lithium difluorophosphate, lithium bis(trifluoromethanesulfonyl)imide, or lithium bis(fluorosulfonyl)imide. This is conducive to formation of a resilient electrode protection film, improves the cycling performance and energy density, and also ensures swelling resistance.

Further, controlling X to be within the above ranges is conductive to formation of a resilient electrode protection film with a uniform thickness, and thus is conducive to improving the cycling performance and energy density of the electrochemical apparatus and also ensures swelling resistance.

In some optional embodiments, X and B satisfy the following relationship: 0.08≤1000X/B≤0.49; and optionally, 0.08≤1000X/B≤0.28.

In this technical solution, X and B satisfying the above relationship is more conducive to improving the cycling performance and energy density of the electrochemical apparatus and also ensures swelling resistance.

In some optional embodiments, the electrolyte satisfies at least one of the following characteristics:

(1) including lithium difluorophosphate and lithium bis(trifluoromethanesulfonyl)imide;
(2) including lithium difluorophosphate and lithium bis(fluorosulfonyl)imide; or
(3) including lithium bis(trifluoromethanesulfonyl)imide and lithium bis(fluorosulfonyl)imide.

According to a second aspect, an embodiment of this application provides an electronic device. The electronic device includes the electrochemical apparatus provided according to the first aspect.

## DETAILED DESCRIPTION OF EMBODIMENTS

The following describes in detail some embodiments of technical solutions of this application.

Unless otherwise defined, all technical and scientific terms used in this specification have the same meanings as commonly understood by persons skilled in the art of this application. The terms used in this specification are merely intended to describe specific embodiments, but not to limit this application.

In the description of some embodiments of this application, the terms "first", "second", and the like are merely used to distinguish between different objects, and shall not be understood as any indication or implication of relative importance or any implicit indication of the quantity, specific sequence or primary-secondary relationship of the technical features indicated.

In this specification, reference to "embodiment" means that specific features, structures, or characteristics described with reference to this embodiment may be included in at least one embodiment of this application. The word "embodiment" appearing in various positions in the specification does not necessarily refer to the same embodiment or an independent or alternative embodiment that is exclusive of other embodiments. Persons skilled in the art explicitly and implicitly understand that some embodiments described herein may be combined with another embodiment.

Some embodiments of this application provide an electrochemical apparatus. The electrochemical apparatus includes:

a negative electrode plate, where the negative electrode plate includes a negative electrode active material; the negative electrode active material includes silicon particles and graphite particles; the silicon particles contain the silicon element; and based on a mass of the silicon particles, a mass percentage of the silicon element is A;
in the negative electrode plate, based on a total quantity of the silicon particles and the graphite particles, a quantity proportion of the silicon particles is D, and a quantity proportion of the graphite particles is E;
the electrochemical apparatus has a capacity of B mAh when discharged from a rated full-charge voltage to 3.0 V at a rate of 0.2C, and the electrochemical apparatus has a capacity of C mAh when discharged from the rated full-charge voltage to 2.75 V at the rate of 0.2C; and
A, B, C, D, and E satisfy the following relationship:

$$[(1.69+8.34A)*D+E]/[(0.42+9.6A)*D+E]>C/B>[(0.56+9.46A)*D+E]/[(0.42+9.6A)*D+E].$$

Further, in some embodiments of this application, a total quantity of the graphite particles and the silicon particles is 100 or above. The inventors have found that setting the quantity proportion D of the silicon particles, the quantity proportion E of the graphite particles, the mass percentage A of the silicon element in the silicon particles, the capacity B measured when the electrochemical apparatus is discharged to 3.0 V, and the capacity C measured when the electrochemical apparatus is discharged to 2.75 V in the negative electrode plate to satisfy the above relationship can effectively improve the cycling performance and energy density of the silicon-containing electrochemical apparatus and also ensure swelling resistance.

In some embodiments of this application, the electrochemical apparatus includes but is not limited to all types of primary batteries, secondary batteries, or capacitors.

In some embodiments of this application, the electrochemical apparatus is a lithium secondary battery.

Further, in some embodiments of this application, "the capacity B measured when the electrochemical apparatus is discharged to 3.0 V" means that: a cell is fully charged to a rated full-charge voltage and then discharged to 3.0 V at 0.2C to obtain a capacity recorded as C1, and then the cell is fully charged to the rated full-charge voltage at a current of 0.2C1 and discharged to 3.0 V to obtain a capacity recorded as B.

Further, in some embodiments of this application, "the capacity C measured when the electrochemical apparatus is discharged to 2.75 V" means that: a cell is fully charged to a rated full-charge voltage and then discharged to 2.75 V at 0.2C to obtain a capacity recorded as C1, and then the cell is fully charged to the rated full-charge voltage at a current of 0.2C1 and discharged to 2.75 V to obtain a capacity recorded as C.

Further, in some embodiments of this application, "the quantity proportion D of the silicon particles and the quantity proportion E of the graphite particles" may be obtained by distinguishing and counting the silicon particles and the graphite particles in the negative electrode plate using a scanning electron microscope in a backscatter mode.

For example, in some embodiments of this application, a scanning electron microscope is used for detection at 10 kV and 10 mA. The silicon particles and the graphite particles in the negative electrode plate are distinguished and counted in a backscatter mode (for example, the silicon particles and the graphite particles may be distinguished based on brightness of the silicon particles and the graphite particles in the backscatter mode, where the silicon particles are brighter than the graphite particles).

Further, in some embodiments of this application, the negative electrode plate includes a negative electrode current collector. In some embodiments, the negative electrode current collector includes a copper foil, an aluminum foil, a nickel foil, a stainless steel foil, a titanium foil, foamed nickel, foamed copper, a polymer base coated with a conductive metal, or any combination thereof.

Further, in some embodiments of this application, the negative electrode active material forms a negative electrode active substance layer, and the negative electrode active substance layer is disposed on at least one side of the current collector.

In some embodiments, the negative electrode active substance layer further includes a binder. The binder includes but is not limited to at least one of polyacrylate, polyimide, polyamide, polyamideimide, polyvinylidene fluoride, styrene butadiene rubber, sodium alginate, polyvinyl alcohol, polytetrafluoroethylene, polyacrylonitrile, sodium carboxymethyl cellulose, potassium carboxymethyl cellulose, sodium hydroxymethyl cellulose, or potassium hydroxymethyl cellulose.

In some embodiments, the negative electrode active substance layer further includes a conductive agent. The conductive agent includes but is not limited to: a carbon-based material, a metal-based material, a conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

The negative electrode plate of this application may be prepared using a method well known in the art. Generally, materials such as a negative electrode material, an optional conductive agent (for example, a carbon material such as carbon black, and metal particles), a binder (for example, SBR), and another optional additive (for example, a PTC thermistor material) are mixed and dispersed in a solvent (for example, deionized water), and the resulting mixture is stirred to uniformity and then uniformly applied onto a negative electrode current collector, followed by drying, to obtain a negative electrode plate. A material such as a metal foil or a porous metal plate may be used as the negative electrode current collector.

Further, in some embodiments of this application, the negative electrode plate is prepared as follows: negative electrode active materials (silicon particles and graphite particles) are mixed to uniformity at a specified mass ratio, added with a binder, a conductive agent, water, and a dispersant, and dispersedly stirred to uniformity; and an obtained negative electrode slurry is applied onto a current collector, followed by drying and cold pressing, to obtain a silicon-containing negative electrode plate.

Further, in some embodiments of this application, the "silicon particles" in the negative electrode active material refer to silicon-carbon material particles.

Further optionally, in some embodiments of this application, the silicon particles may be prepared using the following method:

putting a carbon precursor into a furnace, introducing a specified volume fraction of silane and argon mixed gas, and performing deposition at a specified temperature to obtain a silicon-carbon material.

Further optionally, in some embodiments of this application, the carbon precursor includes:

at least one of glucose, sucrose, fructose, cellulose, acetylene black, pitch, carbon nanotubes, starch, citric acid, polyacrylic acid, or dopamine.

For example, in some embodiments of this application, the carbon precursor is selected from: any one of glucose, sucrose, fructose, cellulose, acetylene black, pitch, carbon nanotubes, starch, citric acid, polyacrylic acid, or dopamine; or the above carbon precursor is selected from: a mixture of glucose, sucrose, and fructose which may be mixed in any proportion.

In other optional embodiments of this application, the "silicon particles" can also be prepared using other methods well known in the art; or the above "silicon particles" are commercially available.

Further, in some embodiments of this application, the silicon particles may have a size of 0.2 $\mu$m to 30 $\mu$m.

Further optionally, in some embodiments of this application, the silicon particles may have a size of 0.3 $\mu$m to 29 $\mu$m.

For example, in some embodiments of this application, the size of the silicon particles may be 0.3 $\mu$m, 0.5 $\mu$m, 0.8 $\mu$m, 1 $\mu$m, 2 $\mu$m, 3 $\mu$m, 5 $\mu$m, 10 $\mu$m, 15 $\mu$m, 20 $\mu$m, or a range defined by any two of these values.

Further, in some embodiments of this application, the "graphite" includes at least one of natural graphite, artificial graphite, or mesocarbon microbeads.

For example, in some embodiments of this application, the "graphite" is selected from any one of natural graphite, artificial graphite, or mesocarbon microbeads; or in some embodiments of this application, the "graphite" is selected from a mixture of natural graphite and artificial graphite which may be mixed in any proportion; or in some embodiments of this application, the "graphite" is selected from a mixture of natural graphite, artificial graphite, and mesocarbon microbeads which may be mixed in any proportion.

Further, in some embodiments of this application, the electrochemical apparatus satisfies at least one of the following characteristics:

$$(1)\ 0.3 \leq A \leq 0.5;$$

$$(2)\ 3793 \leq B \leq 4256;$$

$$(3)\ 3863 \leq C \leq 4311;$$

$$(4)\ 0.1 \leq D \leq 0.6;$$

or

$$(5)\ 0.4 \leq E \leq 0.9.$$

In this technical solution, further limiting the quantity proportion D of the silicon particles, the quantity proportion E of the graphite particles, the mass percentage A of the silicon element in the silicon particles, the capacity B measured when the electrochemical apparatus is discharged to 3.0 V, and the capacity C measured when the electrochemical apparatus is discharged to 2.75 V to be within the above ranges is conducive to further improving the cycling performance of the electrochemical apparatus.

For example, in some embodiments of this application, the electrochemical apparatus satisfies the following characteristics: $0.3 \leq A \leq 0.5$; $3793 \leq B \leq 4256$; $3863 \leq C \leq 4311$; $0.1 \leq D \leq 0.6$; and $0.4 \leq E \leq 0.9$.

For example, in some embodiments of this application, the electrochemical apparatus satisfies the following characteristic: $0.3 \leq A \leq 0.5$.

For example, in some embodiments of this application, the electrochemical apparatus satisfies the following characteristics: $0.3 \leq A \leq 0.5$; and $3793 \leq B \leq 4256$.

For example, in some embodiments of this application, the electrochemical apparatus satisfies the following characteristics: $0.3 \leq A \leq 0.5$; $3793 \leq B \leq 4256$; and $3863 \leq C \leq 4311$.

For example, in some embodiments of this application, the electrochemical apparatus satisfies the following characteristics: $0.3 \leq A \leq 0.5$; $3793 \leq B \leq 4256$; $3863 \leq C \leq 4311$; and $0.1 \leq D \leq 0.6$.

Further, in some embodiments of this application, the electrochemical apparatus satisfies at least one of the following characteristics:

$$(1)\ 0.35{\leq}A{\leq}0.45;$$

$$(2)\ 3821{\leq}B{\leq}4122;$$

$$(3)\ 3958{\leq}C{\leq}4212;$$

$$(4)\ 0.1{\leq}D{\leq}0.4;$$

or

$$(5)\ 0.6{\leq}E{\leq}0.9.$$

In this technical solution, further limiting the quantity proportion D of the silicon particles, the quantity proportion E of the graphite particles, the mass percentage A of the silicon element in the silicon particles, the capacity B measured when the electrochemical apparatus is discharged to 3.0 V, and the capacity C measured when the electrochemical apparatus is discharged to 2.75 V to be within the above ranges is conducive to further improving the cycling performance of the electrochemical apparatus.

Further optionally, for example, in some embodiments of this application, in the electrochemical apparatus, A is 0.35, 0.36, 0.37, 0.38, 0.39, 0.40, 0.41, 0.42, 0.43, 0.44, 0.45, or a range defined by any two of these values.

Further optionally, for example, in some embodiments of this application, in the electrochemical apparatus, B is 3821, 3830, 3840, 3850, 3860, 3870, 3880, 3890, 3990, 4100, 4122, or a range defined by any two of these values.

Further optionally, for example, in some embodiments of this application, in the electrochemical apparatus, C is 3958, 3960, 3970, 3980, 3990, 4210, 4212, or a range defined by any two of these values.

Further optionally, for example, in some embodiments of this application, in the electrochemical apparatus, D is 0.1, 0.15, 0.2, 0.25, 0.30, 0.35, 0.40, or a range defined by any two of these values.

Further optionally, for example, in some embodiments of this application, in the electrochemical apparatus, E is 0.60, 0.65, 0.70, 0.75, 0.80, 0.85, 0.90, or a range defined by any two of these values.

Further, in some embodiments of this application, the quantity proportion D of the silicon particles and the quantity proportion E of the graphite particles satisfy the following relationship: $0.11{\leq}D/E{\leq}1.5$.

Further optionally, for example, in some embodiments of this application, D/E is 0.11, 0.12, 0.15, 0.2, 0.5, 0.6, 0.8, 0.9, 1.0, 1.1, 1.2, 1.3, 1.4, 1.5, or a range defined by any two of these values.

Further, in some embodiments of this application, the mass percentage A of the silicon element and the capacity B measured when the electrochemical apparatus is discharged from the rated full-charge voltage to 3.0 V at the rate of 0.2C satisfy the following relationship: $0.077{\leq}1000A/B{\leq}0.121$.

Further optionally, for example, in some embodiments of this application, 1000A/B is 0.077, 0.085, 0.090, 0.095, 0.112, 0.118, 0.120, 0.121, or a range defined by any two of these values.

Further, in some embodiments of this application, the electrochemical apparatus further includes an electrolyte.

Further, in some embodiments of this application, the electrolyte includes a carbonate compound, and the carbonate compound includes at least one of ethylene carbonate, propylene carbonate, diethyl carbonate, methyl ethyl carbonate, dimethyl carbonate, or sub-propylene carbonate.

Based on a mass of the electrolyte, a mass percentage of the carbonate compound is Y%, where $20{\leq}Y{\leq}55$. For example, in some embodiments of this application, Y is 20, 22, 25, 30, 35, 40, 45, 48, 50, 55, or a range defined by any two of these values.

For example, in some embodiments of this application, the electrolyte includes any one of ethylene carbonate, propylene carbonate, diethyl carbonate, methyl ethyl carbonate, dimethyl carbonate, or sub-propylene carbonate.

For example, in some embodiments of this application, the electrolyte includes a mixture of ethylene carbonate and propylene carbonate which may be mixed in any proportion.

For example, in some embodiments of this application, the electrolyte includes a mixture of methyl ethyl carbonate, dimethyl carbonate, and sub-propylene carbonate which may be mixed in any proportion.

Further, in some embodiments of this application, the electrolyte includes at least one of lithium hexafluorophosphate or lithium tetrafluoroborate.

For example, in some embodiments of this application, the electrolyte includes any one of lithium hexafluorophosphate or lithium tetrafluoroborate.

For example, in some embodiments of this application, the electrolyte includes a mixture of lithium hexafluorophosphate and lithium tetrafluoroborate which may be mixed in any proportion.

Further, in some embodiments of this application, the electrochemical apparatus includes an electrolyte; the electrolyte includes a compound S; the compound S includes at least one of lithium difluorophosphate, lithium bis(trifluoromethanesulfonyl)imide, or lithium bis(fluorosulfonyl)imide.

For example, in some embodiments of this application, the compound S is any one of lithium difluorophosphate, lithium bis(trifluoromethanesulfonyl)imide, or lithium bis(fluorosulfonyl)imide.

For example, in some embodiments of this application, the compound S is a mixture of lithium difluorophosphate and lithium bis(trifluoromethanesulfonyl)imide which may be mixed in any proportion.

For example, in some embodiments of this application, the compound S is a mixture of lithium bis(trifluoromethanesulfonyl)imide and lithium bis(fluorosulfonyl)imide which may be mixed in any proportion.

For example, in some embodiments of this application, the compound S is a mixture of lithium difluorophosphate, lithium bis(trifluoromethanesulfonyl)imide, and lithium bis(fluorosulfonyl)imide which may be mixed in any proportion.

Further, in some embodiments of this application, based on the mass of the electrolyte, a mass percentage of the compound S is X%, where $0.3 \leq X \leq 1.9$.

Further optionally, in some embodiments of this application, $0.3 \leq X \leq 1.1$.

For example, in some embodiments of this application, X is 0.3, 0.4, 0.5, 0.6, 0.7, 0.8, 0.9, 1.0, 1.1, or a range defined by any two of these values.

Further, in some embodiments of this application, X and B satisfy the following relationship: $0.08 \leq 1000X/B \leq 0.49$.

In this technical solution, defining X and B to satisfy the above relationship is conducive to improving the cycling performance of the electrochemical apparatus.

Further optionally, in some embodiments of this application, $0.08 \leq 1000X/B \leq 0.28$.

For example, in some embodiments of this application, $1000X/B$ is 0.1, 0.12, 0.15, 0.2, 0.25, 0.28, or a range defined by any two of these values.

Further, in some embodiments of this application, the electrolyte satisfies at least one of the following characteristics:

(1) including lithium difluorophosphate and lithium bis(trifluoromethanesulfonyl)imide;
(2) including lithium difluorophosphate and lithium bis(fluorosulfonyl)imide; or
(3) including lithium bis(trifluoromethanesulfonyl)imide and lithium bis(fluorosulfonyl)imide.

Further optionally, in some embodiments of this application, the electrolyte includes lithium difluorophosphate and lithium bis(trifluoromethanesulfonyl)imide.

Further optionally, in some embodiments of this application, the electrolyte includes lithium difluorophosphate and lithium bis(fluorosulfonyl)imide.

Further optionally, in some embodiments of this application, the electrolyte includes lithium bis(trifluoromethanesulfonyl)imide and lithium bis(fluorosulfonyl)imide.

Further, in some embodiments of this application, the negative electrode plate includes a current collector. In some embodiments, the current collector includes a copper foil, an aluminum foil, a nickel foil, a stainless steel foil, a titanium foil, foamed nickel, foamed copper, a polymer base coated with a conductive metal, or any combination thereof.

Further, in some embodiments of this application, the electrochemical apparatus further includes a positive electrode plate.

Further, in some embodiments of this application, the positive electrode plate includes a positive electrode current collector and a positive electrode active material layer located on the positive electrode current collector. In some embodiments of this application, the positive electrode active material includes a positive electrode material capable of absorbing and releasing lithium. The positive electrode material releasing lithium includes but is not limited to lithium cobaltate, lithium nickel cobalt manganate, lithium nickel cobalt aluminate, lithium manganate, lithium manganese iron phosphate, lithium vanadium phosphate, lithium vanadyl phosphate, lithium iron phosphate, lithium titanate, and a lithium-rich manganese-based material. In some embodiments of this application, the current collector may include but is not limited to an aluminum foil.

In some embodiments of this application, the positive electrode active material layer further includes a binder and optionally includes a conductive material. The binder enhances bonding between particles of the positive electrode active material and also enhances bonding between the positive electrode active material and the current collector.

In some embodiments of this application, the binder includes but is not limited to polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene 1,1-difluoride, polyethylene, polypropylene, styrene-butadiene rubber, acrylic(acrylate) styrene-butadiene rubber, epoxy resin, or nylon.

In some embodiments of this application, the conductive material includes but is not limited to a carbon-based material, a metal-based material, a conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

The positive electrode plate may be prepared using preparation methods well known in the art. For example, the positive electrode plate may be obtained using the following method: mixing an active material, a conductive material, and a binder in a solvent to prepare an active material composition, and applying the active material composition onto the current collector. In some embodiments, the solvent may include but is not limited to N-methylpyrrolidone. The electrochemical apparatus in this application has higher energy density and better cycling performance, and thus can meet application requirements.

Further, in some embodiments of this application, the electrochemical apparatus further includes a separator.

Further, in some embodiments of this application, the separator may include a matrix layer and a surface treatment layer. The matrix layer is a non-woven fabric, film, or composite film having a porous structure, and the matrix layer is made of a material selected from at least one of polyethylene, polypropylene, polyethylene terephthalate, or polyimide. Specifically, a polypropylene porous film, a polyethylene porous film, a polypropylene non-woven fabric, a polyethylene non-woven fabric, or a polypropylene-polyethylene-polypropylene porous composite film may be used.

The surface treatment layer is provided on at least one surface of the matrix layer, and the surface treatment layer may be a polymer layer or an inorganic substance layer, or may be a layer formed by mixing a polymer and an inorganic substance. The inorganic substance layer includes inorganic particles and a binder. The inorganic particles are selected from at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is selected from at least one of polyvinylidene fluoride, vinylidene fluoride-hexafluoropropylene copolymer, polyamide, polyacrylonitrile, polyacrylate, polyacrylic acid, polyacrylic salt, polyvinylpyrrolidone, polyethylene alkoxylate, polymethyl methacrylate, polytetrafluoroethylene, or polyhexafluoropropylene. The polymer layer includes a polymer, and a material of the polymer is selected from at least one of polyamide, polyacrylonitrile, an acrylate polymer, polyacrylic acid, polyacrylic salt, polyvinylpyrrolidone, polyethylene alkoxylate, polyvinylidene fluoride, or poly(vinylidene fluoride-hexafluoropropylene).

Further, in some embodiments of this application, preparation of a lithium-ion battery includes: stacking a positive electrode plate, a separator, and a negative electrode plate in sequence, so that the separator is located between positive and negative electrodes for separation, and then the stack is wound to obtain a jelly roll. The jelly roll is placed in an outer package, a prepared electrolyte is injected into the outer package, and the outer package is sealed, followed by processes such as formation, degassing, and trimming, to obtain a lithium-ion battery (a lithium secondary battery).

Some embodiments of this application provide an electric device. The electric device includes the electrochemical apparatus according to any one of the foregoing embodiments.

Some specific examples are given below for better illustrating this application.

[Preparation of silicon-carbon composite material]

A carbon precursor resin carbon was placed into a rotary furnace, a silane and argon mixed gas was introduced, a volume fraction of silane in the mixed gas was controlled, and vapor deposition was performed at a specific deposition temperature for a specific deposition time to obtain a silicon-carbon composite material.

Preparation process parameters of each example and comparative example are shown in Table 1.

[Preparation of negative electrode plate]

The silicon-carbon composite material and artificial graphite were mixed to uniformity to serve as a negative electrode active material. The above negative electrode active material, a negative electrode binder styrene-butadiene rubber (SBR), negative electrode conductive agent carbon nanotubes (CNT), and a negative electrode dispersant carboxymethyl cellulose (CMC) were mixed at a mass ratio of 95.8:2.9:0.5:0.8, then added with deionized water as a solvent, and stirred to uniformity to obtain a negative electrode slurry with a solid content of 45wt%. The negative electrode slurry was uniformly applied onto one surface of a 6 $\mu$m thick negative electrode current collector copper foil, and baked for 4 hours to obtain a negative electrode plate with one surface coated with a negative electrode mixture layer. After cold pressing, cutting, and slitting, drying was performed in vacuum at 120°C for 12 hours to obtain a negative electrode plate with a specification of 76.6 mm$\times$875 mm.

The silicon-carbon composite material and artificial graphite of each of the examples and comparative examples were weighed and mixed at a specific molar ratio, where the specific molar ratio was adjusted according to D and E in Table 3.

[Preparation of electrolyte]

In a dry argon atmosphere glove box, propylene carbonate and ethyl propionate were mixed at a mass ratio of 1:1 to obtain a first mixed solution, another component (if any) was added to the first mixed solution, then a lithium salt $LiPF_6$ was added, and the mixture was mixed to uniformity to obtain an electrolyte.

In Comparative example 1, Comparative example 2, and Examples 1-1 to 1-19, no other components were added, and based on a mass of the electrolyte, a mass percentage of the lithium salt was 12.5%, with the remainder being the first mixed solution.

In Examples 2-1 to 2-12, based on the mass of the electrolyte, the mass percentage of the lithium salt was 12.5%, and mass percentages of other components are shown in Table 2, with the remainder being the first mixed solution.

[Preparation of positive electrode plate]

A positive electrode active material lithium cobaltate (LCO), a positive electrode conductive agent acetylene black, and a positive electrode binder polyvinylidene fluoride (PVDF) were mixed at a mass ratio of 96.3:2.2:1.5, added with N-methylpyrrolidone (NMP) as a solvent, and stirred to uniformity to prepare a positive electrode slurry with a solid content of 75wt%. The positive electrode slurry was uniformly applied onto a surface of a 13 $\mu$m thick positive electrode current collector aluminum foil, and the aluminum foil was dried to obtain a positive electrode plate with one surface coated with a positive electrode mixture layer. After cold pressing, cutting, and slitting, drying was performed in vacuum at 85°C for 4 hours to obtain a positive electrode plate with a specification of 74 mm×867 mm.

[Preparation of lithium-ion battery]

The prepared negative electrode plate and positive electrode plate are used, with a PE porous polymer film serving as a separator. The positive electrode plate, the separator, and the negative electrode plate were stacked in sequence, so that the separator was located between the positive electrode plate and the negative electrode plate for separation, and then the stack was wound to obtain an electrode assembly. The electrode assembly was placed into an aluminum-plastic film packaging bag, the prepared electrolyte was injected into the aluminum-plastic film packaging bag, and then the aluminum-plastic film packaging bag was sealed, followed by processes such as formation, degassing, and trimming to obtain a lithium-ion battery.

[Performance test]

1. The performance of the prepared negative electrode plate was tested.

SEM test: Scanning electron microscope characteristics were recorded by a Philips XL-30 field emission scanning electron microscope, and a test was performed at 10 kV and 10 mA. Silicon particles and graphite particles in the negative electrode plate were distinguished and counted in a backscatter mode (a silicon particle region was brighter than a graphite particle region).

Specifically, an active substance layer in a cross section of the electrode plate was equally divided into 8 parts, the cross section of the electrode plate was prepared through argon ion polishing, then any two regions were selected for counting, and then calculation was performed to obtain an arithmetic mean. Parameters D and E were determined.

Measurement method for parameter A:

An argon plasma polished cross section (CP cross section) of the negative electrode plate was observed using a Philips XL-30 field emission scanning electron microscope (SEM), and the CP cross section was subjected to X-ray energy dispersive spectroscopy (EDS) analysis. The negative electrode plate was cut into a size of 1 cm×1 cm, and then Ar plasma was used to cut the electrode plate to prepare a CP cross section sample. EDS point scanning was performed on the CP cross section at a magnification of 1 k. A specific EDS point scanning method was as follows: Silicon particles were selected from the CP cross section, 16 points were randomly selected from a central part of the silicon particles for point scanning to obtain mass concentrations of silicon elements; and an arithmetic mean of the mass concentrations of 16 silicon elements obtained was calculated, where the arithmetic mean was a mass percentage A of the silicon element based on a mass of the silicon particles. The central part of the silicon particles referred to a region which was more than 2 $\mu$m away from edges of the silicon particles; and the mass concentration of the silicon element referred to the mass percentage of the silicon element based on the total mass of all elements in a point scanning region.

Measurement method for parameter B: A cell was fully charged to a rated full-charge voltage and then discharged to 3.0 V at a discharging rate of 0.2C, and a capacity at that point was denoted as C1. Then, the cell was charged to the rated full-charge voltage at a charging rate of 0.2C1 and then discharged to 3.0 V to obtain a capacity value B.

Measurement method for parameter C: The cell was fully charged to the rated full-charge voltage and then discharged to 2.75 V at a discharging rate of 0.2C, and a capacity at that point was denoted as C1. Then, the cell was charged to the rated full-charge voltage at a discharging rate of 0.2C1 and then discharged to 2.75 V to obtain a capacity value C.

2. Lithium-ion battery performance test

(1) Cycling performance

The lithium-ion battery in each of the examples and comparative examples was left standing in a thermostat at 25°C±1°C for 30 minutes, charged to 4.45 V at a constant current of 0.5C, then charged to 0.025C at a constant voltage of 4.45 V, left standing for 5 minutes, and then discharged to 3.0 V at 0.5C. This process was one charge-discharge cycle. A first-cycle discharge capacity C0 of each lithium-ion battery was recorded, and then the cycle was repeated 500 times according to the above cycle process. A cycling discharge capacity C1 at the 500th cycle was recorded. Cycling capacity retention rate after 500 cycles=C1/C0×100%.

(2) Swelling rate test

The lithium-ion battery in each of the examples and comparative examples was charged to 3.95 V at a constant current of 0.5C; at that point, the lithium-ion battery was in an initial half-charged state; and a thickness of the lithium-ion battery in the initial half-charged state was measured using a screw micrometer and was recorded as H0. The lithium-ion battery was constant-current charged to 3.95 V at a charging rate of 0.5C and constant-current discharged to 3.0 V at a discharging rate of 0.5C. This was one cycle. At the 500th cycle, the lithium-ion battery was charged to 4.45 V at a constant current of 0.5C to reach a fully-charged state, and then a thickness of the lithium-ion battery at that point was measured as H1 using a screw micrometer. Swelling rate after 500 cycles=(H1-H0)/H0×100%.

3. Energy density

Energy density=discharge capacity×discharge plateau/cell thickness/cell length/cell width.

The discharge capacity and discharge plateau were measured using the following method: The cell was fully charged to the rated full-charge voltage and then discharged to 3.0 V at 0.2C, and a capacity was recorded as C1. Then, the cell was fully charged to the rated full-charge voltage at a current of 0.2C1 and then discharged to 3.0 V. A capacity at that point was recorded as the discharge capacity, and a discharge plateau obtained in this process was recorded as the discharge plateau.

The cell thickness/cell length/width could be measured using dimension measurement method commonly used in field of batteries.

Performance test results of the examples or comparative examples are shown in Table 3.

Table 1

| | | Preparation process | | |
| --- | --- | --- | --- | --- |
| | | Volume fraction of silane in mixed gas | Deposition temperature (°C) | Deposition time (h) |
| | Example 1-1 | 40% | 8 | 500 |
| | Example 1-2 | 40% | 8 | 500 |
| | Example 1-3 | 50% | 8 | 500 |
| | Example 1-4 | 30% | 8 | 500 |
| | Example 1-5 | 40% | 8 | 500 |
| | Example 1-6 | 40% | 8 | 600 |
| | Example 1-7 | 40% | 8 | 400 |
| | Example 1-8 | 40% | 12 | 500 |
| | Example 1-9 | 40% | 4 | 500 |
| | Example 1-10 | 40% | 8 | 500 |

(continued)

|  | Preparation process | | |
|---|---|---|---|
|  | Volume fraction of silane in mixed gas | Deposition temperature (°C) | Deposition time (h) |
| Example 1-11 | 40% | 8 | 500 |
| Example 1-12 | 40% | 8 | 500 |
| Example 1-13 | 40% | 8 | 500 |
| Example 1-14 | 40% | 8 | 500 |
| Example 1-15 | 40% | 8 | 500 |
| Example 1-16 | 40% | 8 | 500 |
| Example 1-17 | 40% | 8 | 500 |
| Example 1-18 | 40% | 8 | 500 |
| Example 1-19 | 40% | 8 | 500 |
| Example 2-1 | 40% | 8 | 500 |
| Example 2-2 | 40% | 8 | 500 |
| Example 2-3 | 40% | 8 | 500 |
| Example 2-4 | 40% | 8 | 500 |
| Example 2-5 | 40% | 8 | 500 |
| Example 2-6 | 40% | 8 | 500 |
| Example 2-7 | 40% | 8 | 500 |
| Example 2-8 | 40% | 8 | 500 |
| Example 2-9 | 40% | 8 | 500 |

|  | Preparation process | | |
|---|---|---|---|
|  | Volume fraction of silane in mixed gas | Deposition temperature (°C) | Deposition time (h) |
| Example 2-10 | 40% | 8 | 500 |
| Example 2-11 | 40% | 8 | 500 |
| Example 2-12 | 40% | 8 | 500 |
| Comparative example 1 | 40% | 500 | 1 |
| Comparative example 2 | 40% | 500 | 20 |

Table 2

|  | Carbonate compound | | Compound S | | 1000X/B |
|---|---|---|---|---|---|
|  | Type | Mass percentage Y (%) | Type | Mass percentage X (%) |  |
| Example 2-1 | Ethylene carbonate | 10 | \ | \ | \ |
| Example 2-2 | Ethylene carbonate | 20 | \ | \ | \ |
| Example 2-3 | Ethylene carbonate | 28 | \ | \ | \ |

(continued)

| | Carbonate compound | | Compound S | | 1000X/B |
|---|---|---|---|---|---|
| | Type | Mass percentage Y (%) | Type | Mass percentage X (%) | |
| Example 2-4 | Ethylene carbonate | 48 | \ | \ | \ |
| Example 2-5 | Ethylene carbonate | 55 | \ | \ | \ |
| Example 2-6 | Ethylene carbonate | 75 | \ | \ | \ |
| Example 2-7 | Ethylene carbonate | 20 | Lithium difluorophosphate | 1 | 0.26 |
| Example 2-8 | Ethylene carbonate | 20 | Lithium bis(trifluoromethanesulfonyl) imide | 0.3 | 0.08 |
| Example 2-9 | Ethylene carbonate | 20 | Lithium bis(fluorosulfonyl)imide | 1.9 | 0.49 |
| Example 2-10 | Ethylene carbonate | 20 | Lithium difluorophosphate + lithium bis(trifluoromethanesulfonyl)imide | 0.7+0.4=1.1 | 0.28 |
| Example 2-11 | Ethylene carbonate | 20 | Lithium bis(trifluoromethanesulfonyl) imide + lithium bis(fluorosulfonyl)imide | 0.4+0.4=0.8 | 0.21 |
| Example 2-12 | Ethylene carbonate | 20 | Lithium difluorophosphate + lithium bis(fluorosulfonyl)imide | 0.3+0.1=0.4 | 0.10 |

EP 4 607 604 A1

Table 3

| | Related parameters of negative electrode plate | | | | | | Battery | | | | | | | |
|---|---|---|---|---|---|---|---|---|---|---|---|---|---|---|
| | A | D | E | D/E | B | C | 1000A/B | 1000X/B | [(1.69+8.34A) * D+E]/[(0.42+ 9.6A)*D+E] | C/B | (0.56+9.46A) * D+E/(0.42+ 9.6A)*D+E | Capacity retention rate after 500 cycles (%) | Cell swelling rate after 500 cycles (%) | Energy density |
| Example 1-1 | 40% | 60% | 40% | 1.5 | 3900 | 4002 | 0.1026 | 0.2564 | 1.133 | 1.0262 | 1.0146 | 87.30% | 9.20% | 805 |
| Example 1-2 | 40% | 40% | 60% | 0.67 | 4122 | 4200 | 0.1213 | 0.2426 | 1.0694 | 1.0189 | 1.0076 | 85.00% | 10.20% | 821 |
| Example 1-3 | 50% | 20% | 80% | 0.25 | 3892 | 3992 | 0.0771 | 0.2569 | 1.1222 | 1.0257 | 1.0134 | 90.50% | 8.10% | 782 |
| Example 1-4 | 30% | 20% | 80% | 0.25 | 4007 | 4187 | 0.0998 | 0.2496 | 1.0927 | 1.0449 | 1.0102 | 88.90% | 8.50% | 786 |
| Example 1-5 | 40% | 20% | 80% | 0.25 | 4087 | 4212 | 0.1174 | 0.2447 | 1.0737 | 1.0306 | 1.0081 | 84.00% | 10.30% | 824 |
| Example 1-6 | 48% | 20% | 80% | 0.25 | 3900 | 3984 | 0.0923 | 0.2564 | 1.1037 | 1.0215 | 1.0114 | 86.00% | 9.60% | 809 |
| Example 1-7 | 36% | 20% | 80% | 0.25 | 4102 | 4212 | 0.1097 | 0.2438 | 1.0804 | 1.0268 | 1.0088 | 84.20% | 10.10% | 819 |
| Example 1-8 | 45% | 20% | 80% | 0.25 | 3982 | 4102 | 0.0879 | 0.2511 | 1.1066 | 1.0301 | 1.0117 | 90.80% | 8.10% | 782 |
| Example 1-9 | 35% | 20% | 80% | 0.25 | 3793 | 3863 | 0.1055 | 0.2636 | 1.1555 | 1.0185 | 1.0171 | 83.80% | 10.70% | 828 |
| Example 1-10 | 40% | 60% | 40% | 1.5 | 3856 | 3958 | 0.1037 | 0.2593 | 1.1555 | 1.0265 | 1.0171 | 81.50% | 13.20% | 842 |
| Example 1-11 | 40% | 60% | 40% | 1.5 | 3922 | 4121 | 0.102 | 0.7139 | 1.0927 | 1.0507 | 1.0102 | 89.20% | 8.20% | 784 |
| Example 1-12 | 40% | 20% | 80% | 0.25 | 3954 | 4163 | 0.1012 | 0.2529 | 1.0927 | 1.0529 | 1.0102 | 88.90% | 8.50% | 786 |

| | Related parameters of negative electrode plate | | | | | | Battery | | | | | | | |
|---|---|---|---|---|---|---|---|---|---|---|---|---|---|---|
| | A | D | E | D/E | B | C | 1000A/B | 1000X/B | [(1.69+8.34A) * D+E]/[(0.42+ 9.6A)*D+E] | C/B | (0.56+9.46A) * D+E/(0.42+ 9.6A)*D+E | Capacity retention rate after 500 cycles (%) | Cell swelling rate after 500 cycles (%) | Energy density |
| Example 1-13 | 40% | 20% | 80% | 0.25 | 4003 | 4180 | 0.0999 | 0.005 | 1.0927 | 1.0442 | 1.0102 | 86.20% | 9.20% | 805 |
| Example 1-14 | 40% | 20% | 80% | 0.25 | 3856 | 3964 | 0.1037 | 0.2593 | 1.1456 | 1.028 | 1.016 | 84.60% | 10.80% | 829 |

| | Related parameters of negative electrode plate | | | | | | Battery | | | | | | | |
|---|---|---|---|---|---|---|---|---|---|---|---|---|---|---|
| | A | D | E | D/E | B | C | 1000A/B | 1000X/B | [(1.69+8.34A)* D+E]/[(0.42+9.6A)*D+E] | C/B | (0.56+9.46A)* D+E/(0.42+9.6A)*D+E | Capacity retention rate after 500 cycles (%) | Cell swelling rate after 500 cycles (%) | Energy density |
| Example 1-15 | 40% | 50% | 50% | 1 | 4008 | 4109 | 0.0998 | 0.2495 | 1.1162 | 1.0252 | 1.0127 | 88.10% | 8.80% | 791 |
| Example 1-16 | 40% | 30% | 70% | 0.43 | 4256 | 4311 | 0.094 | 0.235 | 1.0578 | 1.0129 | 1.0063 | 90.20% | 8.00% | 774 |
| Example 1-17 | 40% | 10% | 90% | 0.11 | 3790 | 3860 | 0.0528 | 0.2639 | 1.1221 | 1.0185 | 1.0134 | 91.20% | 7.97% | 773 |
| Example 1-18 | 20% | 5% | 30% | 0.17 | 4300 | 4350 | 0.1395 | 0.2326 | 1.0678 | 1.0116 | 1.0074 | 80.20% | 18.20% | 883 |
| Example 1-19 | 60% | 65% | 91% | 0.71 | 3722 | 3726 | 0.0269 | 0.2687 | 1.0561 | 1.0011 | 1.0062 | 92.10% | 7.80% | 730 |
| Example 2-1 | 40% | 60% | 40% | 1.5 | 3900 | 4002 | 0.1026 | 0.2564 | 1.133 | 1.0262 | 1.0146 | 87.40% | 9.08% | 806 |
| Example 2-2 | 40% | 60% | 40% | 1.5 | 3900 | 4002 | 0.1026 | 0.2564 | 1.133 | 1.0262 | 1.0146 | 88.10% | 8.87% | 803 |
| Example 2-3 | 40% | 60% | 40% | 1.5 | 3900 | 4002 | 0.1026 | 0.2564 | 1.133 | 1.0262 | 1.0146 | 88.31% | 8.76% | 802 |
| Example 2-4 | 40% | 60% | 40% | 1.5 | 3900 | 4002 | 0.1026 | 0.2564 | 1.133 | 1.0262 | 1.0146 | 88.33% | 8.75% | 801 |
| Example 2-5 | 40% | 60% | 40% | 1.5 | 3900 | 4002 | 0.1026 | 0.2564 | 1.133 | 1.0262 | 1.0146 | 88.02% | 8.93% | 804 |
| Example 2-6 | 40% | 60% | 40% | 1.5 | 3900 | 4002 | 0.1026 | 0.2564 | 1.133 | 1.0262 | 1.0146 | 87.50% | 9.12% | 808 |
| Example 2-7 | 40% | 60% | 40% | 1.5 | 3900 | 4002 | 0.1026 | 0.2564 | 1.133 | 1.0262 | 1.0146 | 88.60% | 8.60% | 800 |
| Example 2-8 | 40% | 60% | 40% | 1.5 | 3900 | 4002 | 0.1026 | 0.2564 | 1.133 | 1.0262 | 1.0146 | 88.40% | 8.73% | 801 |

| | Related parameters of negative electrode plate | | | | | | Battery | | | | | | | |
|---|---|---|---|---|---|---|---|---|---|---|---|---|---|---|
| | A | D | E | D/E | B | C | 1000A/B | 1000X/B | [(1.69+8.34A) * D+E]/[(0.42+ 9.6A)*D+E] | C/B | (0.56+9.46A) * D+E/(0.42+ 9.6A)*D+E | Capacity retention rate after 500 cycles (%) | Cell swelling rate after 500 cycles (%) | Energy density |
| Example 2-9 | 40% | 60% | 40% | 1.5 | 3900 | 4002 | 0.1026 | 0.2564 | 1.133 | 1.0262 | 1.0146 | 88.28% | 8.79% | 802 |
| Example 2-10 | 40% | 60% | 40% | 1.5 | 3900 | 4002 | 0.1026 | 0.2564 | 1.133 | 1.0262 | 1.0146 | 88.98% | 8.21% | 796 |

| | Related parameters of negative electrode plate | | | | | | Battery | | | | | | | |
|---|---|---|---|---|---|---|---|---|---|---|---|---|---|---|
| | A | D | E | D/E | B | C | 1000A/B | 1000X/B | [(1.69+8.34A) * D+E]/[(0.42+ 9.6A)*D+E] | C/B | (0.56+9.46A) * D+E/(0.42+ 9.6A)*D+E | Capacity retention rate after 500 cycles (%) | Cell swelling rate after 500 cycles (%) | Energy density |
| Example 2-11 | 40% | 60% | 40% | 1.5 | 3900 | 4002 | 0.1026 | 0.2564 | 1.133 | 1.0262 | 1.0146 | 88.83% | 8.42% | 798 |
| Example 2-12 | 40% | 60% | 40% | 1.5 | 3900 | 4002 | 0.1026 | 0.2564 | 1.133 | 1.0262 | 1.0146 | 88.90% | 8.35% | 797 |
| Comparative example 1 | 10% | 5% | 95% | 0.05 | 4429 | 4700 | 0.1806 | 0.2258 | 1.0217 | 1.0612 | 1.0023 | 62.50% | 30.20% | 900 |
| Comparative example 2 | 80% | 20% | 80% | 0.25 | 3821 | 3921 | 0.1047 | 0.2617 | 1.1555 | 1.0262 | 1.0171 | 73.50% | 20.2% | 835 |

As can be seen from the above tables:
The solution of some embodiments of this application can ensure swelling resistance of the cell while improving the cycling performance and energy density.

Further, in the solution of Comparative example 1, C/B<[(0.56+9.46A)*D+E]/[(0.42+9.6A)*D+E], which is not within the ranged provided in this application. In this case, the energy density of the battery significantly decreases. Therefore, this solution cannot achieve the effect of ensuring the swelling resistance of the cell while improving the cycling performance and energy density.

Further, in the solution of Comparative example 2, C/B>[(1.69+8.34A)*D+E]/[(0.42+9.6A)*D+E], which is not within the range provided in this application. In this case, the swelling resistance of the battery significantly deteriorates. Therefore, this solution cannot achieve the effect of ensuring the swelling resistance of the cell while improving cycling performance and energy density.

Further, as compared with other examples, in Example 18, it can be seen that when A is less than 30%, D is less than 10%, E is less than 40%, B is less than 3793, and C is less than 3863, the energy density of the battery decreases significantly.

Further, as compared with other examples, in Example 19, it can be seen that when A is greater than 50%, D is greater than 60%, E is greater than 90%, B is greater than 4256, and C is greater than 4311, it is not conducive to the swelling resistance of the battery.

Further, as compared with Examples 2-2 to 2-5, in Examples 2-1 and 2-6, it can be seen that when 0≤Y≤55, the cycling performance, energy density, and swelling resistance of the electrochemical apparatus can be better balanced.

Further, as compared with Examples 2-7, 2-8 and 2-10 to 2-12, in Example 2-9, it can be seen that when 0.08≤1000X/B≤0.28, the cycling performance, energy density, and swelling resistance of the electrochemical apparatus can be better balanced.

The above-described embodiments are some embodiments of this application but are not all embodiments. The detailed description of some embodiments of this application is not intended to limit the protection scope of this application, but merely to illustrate selected embodiments of this application. All other embodiments obtained by persons of ordinary skill in the art based on some embodiments of this application without creative efforts shall fall within the protection scope of this application.

## Claims

1. An electrochemical apparatus, **characterized in that**, the electrochemical apparatus comprises:

   a negative electrode plate, wherein the negative electrode plate comprises a negative electrode active material; the negative electrode active material comprises silicon particles and graphite particles; the silicon particles contain the silicon element; and based on a mass of the silicon particles, a mass percentage of the silicon element is A;
   in the negative electrode plate, based on a total quantity of the silicon particles and the graphite particles, a quantity proportion of the silicon particles is D, and a quantity proportion of the graphite particles is E;
   the electrochemical apparatus has a capacity of B mAh when discharged from a rated full-charge voltage to 3.0 V at a rate of 0.2C, and the electrochemical apparatus has a capacity of C mAh when discharged from the rated full-charge voltage to 2.75 V at the rate of 0.2C; and [(1.69+8.34A)*D+E]/[(0.42+9.6A)*D+E]>C/B>[(0.56+9.46A)*D+E]/[(0.42+9.6A)*D+E].

2. The electrochemical apparatus according to claim 1, **characterized in that**, the electrochemical apparatus satisfies at least one of the following characteristics:

$$(1)\ 0.3{\leq}A{\leq}0.5;$$

$$(2)\ 3793{\leq}B{\leq}4256;$$

$$(3)\ 3863{\leq}C{\leq}4311;$$

$$(4)\ 0.1 \leq D \leq 0.6;$$

or

$$(5)\ 0.4 \leq E \leq 0.9.$$

3. The electrochemical apparatus according to claim 1 or 2, **characterized in that**, $0.11 \leq D/E \leq 1.5$.

4. The electrochemical apparatus according to any one of claims 1 to 3, **characterized in that**, $0.077 \leq 1000A/B \leq 0.121$.

5. The electrochemical apparatus according to any one of claims 1 to 4, wherein the electrochemical apparatus comprises an electrolyte, **characterized in that**,
the electrolyte comprises a carbonate compound, the carbonate compound comprises at least one selected from the group consisting of ethylene carbonate, propylene carbonate, diethyl carbonate, methyl ethyl carbonate, dimethyl carbonate, and sub-propylene carbonate.

6. The electrochemical apparatus according to claim 5, **characterized in that**, based on a mass of the electrolyte, a mass percentage of the carbonate compound is Y%, wherein $20 \leq Y \leq 55$.

7. The electrochemical apparatus according to claim 5 or 6, **characterized in that**, the electrolyte further comprises a compound S, the compound S comprises at least one selected from the group consisting of lithium difluorophosphate, lithium bis(trifluoromethanesulfonyl)imide, and lithium bis(fluorosulfonyl)imide.

8. The electrochemical apparatus according to claim 7, **characterized in that**, based on the mass of the electrolyte, a mass percentage of the compound S is X%, $0.3 \leq X \leq 1.9$.

9. The electrochemical apparatus according to claim 7 or 8, **characterized in that**, based on the mass of the electrolyte, a mass percentage of the compound S is X%, $0.3 \leq X \leq 1.1$.

10. The electrochemical apparatus according to claim 8 or 9, **characterized in that**, $0.08 \leq 1000X/B \leq 0.49$.

11. The electrochemical apparatus according to claim 8 or 9, **characterized in that**, $0.08 \leq 1000X/B \leq 0.28$.

12. The electrochemical apparatus according to any one of claims 5 to 11, **characterized in that**, the electrolyte further comprises lithium difluorophosphate and lithium bis(trifluoromethanesulfonyl)imide.

13. The electrochemical apparatus according to any one of claims 5 to 12, **characterized in that**, the electrolyte further comprises lithium difluorophosphate and lithium bis(fluorosulfonyl)imide.

14. The electrochemical apparatus according to any one of claims 5 to 13, **characterized in that**, the electrolyte further comprises lithium bis(trifluoromethanesulfonyl)imide and lithium bis(fluorosulfonyl)imide.

15. An electronic device, **characterized in that**, the electronic device comprises the electrochemical apparatus according to any one of claims 1 to 14.

## EUROPEAN SEARCH REPORT

Europäisches
Patentamt
European
Patent Office
Office européen
des brevets

**Application Number**

EP 25 15 9360

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 270 532 A1 (NINGDE AMPEREX TECHNOLOGY LTD [CN]) 1 November 2023 (2023-11-01) * claims 1, 4, 5, 7, 10, 11 * * paragraphs [0003], [0008], [0010], [0013], [0018] - [0020], [0043] * * figures 3, 4 * ----- | 1-15 | INV. H01M4/133 H01M4/38 H01M4/587 H01M10/0525 H01M4/36 |

**TECHNICAL FIELDS SEARCHED (IPC)**

H01M

The present search report has been drawn up for all claims

| Place of search | Date of completion of the search | Examiner |
|---|---|---|
| Munich | 11 June 2025 | Riederer, Florian |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 15 9360

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2025

| Patent document cited in search report | Publication date | Patent family member(s) | Publication date |
|---|---|---|---|
| EP 4270532 A1 | 01-11-2023 | CN 115136348 A | 30-09-2022 |
| | | EP 4270532 A1 | 01-11-2023 |
| | | KR 20230117625 A | 08-08-2023 |
| | | WO 2022140975 A1 | 07-07-2022 |

EPO FORM P0459

For more details about this annex : see Official Journal of the European Patent Office, No. 12/82